# EUROPÄISCHE PATENTSCHRIFT

(11) **EP 1 424 669 B1**
(45) Veröffentlichungstag und Bekanntmachung des Hinweises auf die Patenterteilung: **02.01.2008**
(21) Anmeldenummer: 04100770.9
(22) Anmeldetag: 12.04.2002
(51) Int. Cl.: G09F 3/02

(54) **Verfahren, um Käselaibe zu markieren, Etikette zur Markierung von Käselaiben und markierte Käselaibe**
Method of marking a cheese loaf, label for marking it and a marked cheese loaf
Méthode de marquage des meules de fromage, étiquette pour ce marquage et meules ainsi marquées

(30) Priorität: 08.10.2001 CH 18482001
(43) Veröffentlichungstag der Anmeldung: 02.06.2004
(62) Teilanmeldung aus: 02405299.5
(73) Patentinhaber: Emmentaler Switzerland, 3001 Bern (CH)
(72) Erfinder: Kaufmann, Erwin, 3032 Hinterkappelen (CH); Spring, Hans, 3116 Kirchdorf (CH)
(74) Vertreter: P&TS Patents & Technology Surveys SA

(56) Entgegenhaltungen:
- EP-A- 0 871 153
- FR-A- 2 717 939

## Beschreibung

Die vorliegende Erfindung betrifft ein Verfahren zur Markierung von Käselaiben, die zum Detailverkauf in mehrere Portionen geschnitten werden. Die vorliegende Erfindung betrifft auch eine Etikette, die mit dem benannten Verfahren die Markierung eines Käselaibes erlaubt, wobei jede für den Detailverkauf bestimmte Portion aus dem markierten Käselaibe eine Kennzeichnung aufweist.

Zur Erläuterung des Nachfolgenden werden hier grob als Beispiel die Hauptphasen des Herstellungsprozesses eines Hartkäses erwähnt. Die Milch wird geronnen, in Körner geschnitten und erwärmt. Die so erzeugten Bruchkörner werden dann in eine Pressform gepumpt, wobei die Molke abfliesst. Anschliessend wird der Käse gepresst. Dabei verliert er Wasser. Nach einige Stunden wird der Käse aus der Pressform genommen. Der Laib geht dann durch einen Reifenprozess, der stark vom Typ Käse abhängt. Die Käse werden während einer bestimmten Zeit in Salzwasser gelagert. Anschliessend erfolgt die Reifung unter definierten Klimabedingungen und regelmässiger Pflege. Diese Phase wird im Folgenden als Reifung oder Reifeprozess bezeichnet. Am Ende dieses Prozesses ist der Käselaib bereit für den Konsum.

Während des Herstellungsprozesses muss der Laib auf irgend eine Art gekennzeichnet werden.

Es sind schon einige Verfahren bekannt, um auf dem Käse selber Informationen über seinen Typ, seine Herkunft oder seine Qualität anzubringen.

Ein Verfahren besteht zum Beispiel darin, dass eine Marke aus hartem Material (z.B. Kasein) auf den frischen Laib gelegt wird. Die Marke sinkt während dem Formen in den äussersten Teil des Käses ein und wird damit fest im Laib eingebunden. Eine solche Marke kann nur einen sehr kleinen Teil der Oberfläche des Laibes abdecken, da solche Materialien nicht wasserdurchlässig sind und somit den Reifeprozess des Käses zu stark beeinflussen würden. Die Marke ist also im Verhältnis zum Laib relativ klein und dient nur zur Rückverfolgbarkeit des ganzen Laibes. Die auf der Marke enthaltenen Informationen sind auf den für den Detailverkauf vorgesehenen Portionen des Laibes nicht mehr vorhanden. Ein weiterer Nachteil dieses Verfahrens ist, dass die Marke hart ist und brechen kann.

Weitere Verfahren (EP-A1-0945354 und EP0871153) bestehen darin, dass eine Etikette auf den ausgereiften Käselaib geklebt wird. Da die Etikette nicht im Käse eingebunden ist, bieten solche Verfahren keinen Schutz gegen Austausch oder Fälschungen der Etiketten. Solche Verfahren benötigen ausserdem Klebstoff um die Etikette zu befestigen, wobei jede zusätzliche fremde Zutat potentiell ein Störungsfaktor für die Natürlichkeit des Produktes ist. Eine geklebte Etikette eignet sich weniger gut zum Schneiden und kann beim Schneiden des Käses auch abfallen.

Andere Verfahren (WO83/01051, EP0258632, NL9100375) bestehen darin, dass eine Etikette ohne Klebstoff auf die durch örtliche Erhitzung geschmolzene Rinde des Käses geklebt wird. Die Etikette ist dann fest in der Rinde des Käselaibes eingebunden, aber solche Verfahren sind nicht für jeden Typ Käse geeignet. Nur wenig Käsesorten ertragen eine auch nur lokale Erhitzung. Insbesondere bei Hartkäsen wie beim Emmentaler Käse ist bei einer solchen Behandlung mit Qualitätseinbussen zu rechnen.

Ein Ziel dieser Erfindung ist, ein Verfahren anzubieten, mit dem der Käselaib zu Beginn des Herstellungsprozesses am Herstellungsort eindeutig und endgültig markiert wird und mit dem auch jede für den Detailverkauf bestimmte Portion des Laibes deutlich identifiziert werden kann.

Das Verfahren und sein Resultat werden nun anhand der Figuren näher erläutert.

Die Figur 1 zeigt eine Pressform, in welcher ein frischer Käselaib geformt wird.

Die Figur 2 zeigt den frischen Laib in der Pressform in der auf die Käsekörner eine spezielle Etikette gelegt wird.

Die Figur 3 zeigt die Etikette, die auf der Oberfläche des frischen Laibes in der Pressform liegt.

Die Figur 4 zeigt die Etikette, die während des Pressens in der Pressform mit der Oberfläche des frischen Laibes 2 verwachsen ist.

Die Figur 5 zeigt einen Seitenansicht eines ausgereiften Käselaibes.

Die Figur 6 zeigt einen Obenansicht eines ausgereiften Käselaibes.

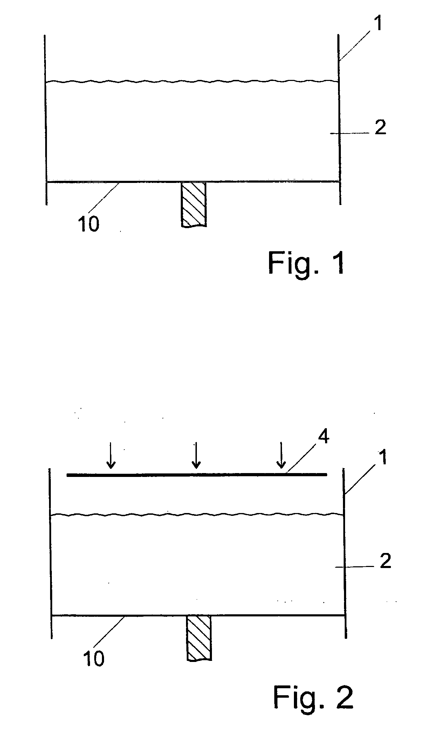

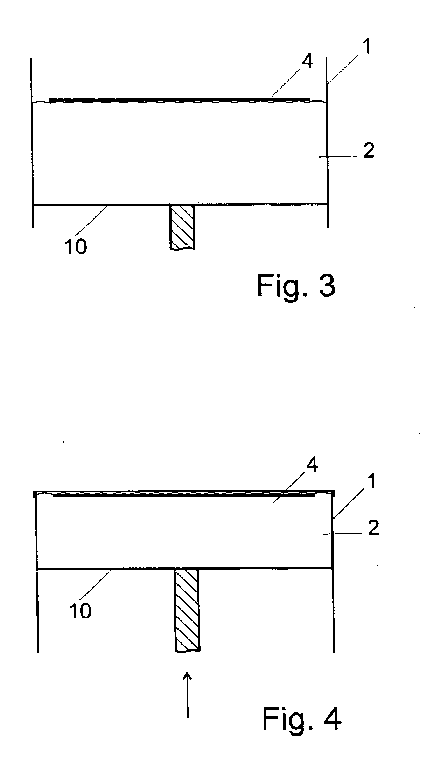

Das Verfahren läuft wie folgt. Eine feuchtigkeitsabsorbierende Etikette 4, vorzugsweise aus Teebeutelpapier, wird auf den frischen Laib 2 in der Pressform 1 gelegt (Fig. 2) und durch die Feuchtigkeit des frischen Käses benetzt (Fig. 3). Während des Pressens verwächst sie mit der Oberfläche des frischen Käselaibes (Fig. 4). Die Etikette 4 bleibt auf dem Laib 2 während des ganzen Reifungsprozesses und befindet sich am Ende der Reifezeit völlig in der Rinde, leicht unter der Oberfläche des ausgereiften Käses 3. Die Oberfläche des Käselaibes 3 weist also am Rand 42 der Etikette 4 kein Übergang auf.

Auf die andere Seite des ausgereiften Käselaibes 3 kann eine weitere Etikette 5 nach dem Reifungsprozess geklebt werden, um andere Informationen aufzugeben, zum Beispiel Angaben, die erst nach der Reifung des Laibes bekannt sind, wie z.B. den Reifengrad des Käses, Marke, Name des Detaillisten und/oder den Preis. Der Rand 30 des ausgereiften Laibes 3 kann auch durch eine Etikette oder ein Stempel zum Beispiel nach einer Qualitätskontrolle markiert werden.

Da die Etikette 4 am Ende des Reifeprozesses fest mit der Rinde des ausgereiften Käses 3 verwachsen ist, werden spätere Verfälschungen oder das Austauschen von Etiketten verhindert. Der Käselaib ist also vom Beginn der Herstellung an endgültig markiert.

In einer Variante des Verfahrens werden die Etiketten vorzugsweise durch einen Branchenvereinigung oder eine andere für die Qualitätsüberwachung zuständige Organisation an den einzelnen Produzenten ausgehändigt.

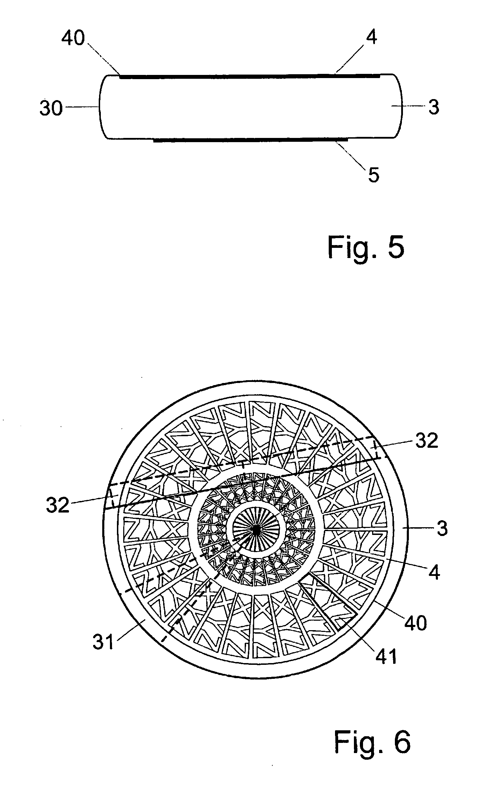

Das Verfahren ist besonders geeignet für Hartkäse die während des Reifeprozesses keine Schmierebildung haben, wie zum Beispiel Emmentaler Käse. Die Etikette 4 wird durch die Pflege der Laibe nicht beschädigt und sie bleibt auf der Rinde des ausgereiften Käses 3 deutlich sichtbar (Fig. 5 und Fig. 6).

Ein wichtiges Merkmal des Verfahrens ist es, dass die Etikette 4 vor dem Pressen auf den frischen Käse 2 gelegt wird. Eine Etikette wird aus einem feuchtigkeitsabsorbierenden Material benutzt, welches seine Struktur im Wasser nicht verliert. Das bevorzugte Material ist Teebeutelpapier. Da es gas- und wasserdurchlässig ist, ist dieses Material gegenüber dem Reifeprozess des Käses völlig neutral, was den Einsatz von Etiketten ermöglicht, die den ganzen Laib bedecken.

Ein weiterer Vorteil von Teebeutelpapier gegenüber von Marken aus hartem Material ist, dass es einfach und billig bedruckt werden kann.

Obwohl die Etikette 4 im reifen Käse 3 in der Rinde liegt, die für den Konsum nicht vorgesehen ist, wird dem Farbstoff, der für die Herstellung der Etiketten eingesetzt wird, besondere Aufmerksamkeit geschenkt.

Auf der Etikette 4 können beliebige Merkmale 41 des Käses und/oder der Zutaten aufgedruckt werden, die schon zu Beginn des Herstellungsprozesses bekannt sind, wie zum Beispiel den Typ Käse, die Herstellungsmethode, die Herkunft und/oder die Qualität der Zutaten. Die Qualität kann zum Beispiel folgende Angaben umfassen: biologische Herstellungsmethoden, Anteile an den Inhaltsstoffen, usw. Diese Merkmale können klar in Worten geschrieben werden, oder durch einen Kode wie zum Beispiel einen Farbkode dargestellt werden.

Die Etikette 4 kann auch Information enthalten, die eine Rückverfolgbarkeit des Käselaibes erlauben, wie z.B. eine Betriebszulassungsnummer und/oder eine Identifizierung des einzelnen Laibes.

Die Form, die Grösse und die Graphik der Etikette 4 hängt von der Form, von der Grösse und von den für den Detailverkauf üblichen Portionen des Käses ab.

In einer ersten bevorzugten Variante wird das Verfahren für Laibe von mehreren Kilos gebraucht, die üblicherweise beim Detailverkauf entweder in Segmente 31 oder in rechteckige Portionen 32 geschnitten werden. In diesem Fall ist eine Etikette 4 wie auf Figur 6 dargestellt besonders geeignet, weil jede übliche Portion 31 oder 32 des Käses 3 einen Teil der Etikette 4 enthält, der eine klare Erkennung der Merkmale 41 des Käses 3 ermöglicht.

Für grosse Käse, wie zum Beispiel Emmentaler Käse, bedeckt die Etikette vorzugsweise die ganze Oberfläche des Laibes und die Identifikationsmerkmale 41 werden auf der ganzen Fläche regelmässig wiederholt. Auf diese Weise können die Portionen 31 oder 32 mehrmals geschnitten werden und die Identifikation des Käses bleibt trotzdem möglich.

In einer anderen Variante könnte eine ringförmige Etikette geeignet sein, wenn für den Detailverkauf die Segmente nicht in der Länge zusätzlich geschnitten werden.

In einer anderen Variante sind die Merkmale durch einen Farbenkode und/oder einen Formenkode dargestellt, und die entsprechenden Farben und/oder Formen sind klein auf die ganze Fläche der Etikette gedruckt, wobei die Etikette den ganzen Laib bedeckt. Auf diese Weise kann der Käse beliebig geschnitten werden und alle Portionen bleiben eindeutig markiert.

Die vorliegende Erfindung betrifft auch einen Käselaib 3, der gemäss dem benannten Verfahren auf einer Seite markiert wurde, wobei auf die andere Seite nach der Reifung des Käses eine weitere Etikette 5 geklebt wird (Fig. 5). Die erste Etikette 4 enthält Informationen über den Käse und/oder seine Zutaten, die vor dem Pressen schon bekannt sind, wie zum Beispiel die Herkunft und Qualität der Milch, Typ und Herkunft des Käses. Die weitere Etikette 5 wird durch den Verteiler oder den Detaillisten aufgeklebt und enthält Informationen wie z.B. den Reifengrad des Käses, Marke, Name des Detaillisten und/oder den Preis. Die Grösse und Konfiguration der weiteren Etikette 5 ist auch der üblichen Portionen 31 oder 32 des Käselaibes 3 angepasst, so dass beim Aufteilen des Laibes in Portionen, jede Seite der Portion 31 oder 32 durch ein bedeutendes Stück der jeweiligen Etiketten bedeckt wird.

In bestimmten Fälle kann der Käselaib noch zusätzlich auf dem Rand durch eine zusätzliche Etikette oder einen Stempel markiert werden, zum Beispiel nach einer Qualitätskontrolle oder um Behördevorschriften zu füllen.

Als Beispiel zeigt die Figur 6 einen ausgereiften Käselaib 3, der gemäss der ersten Variante des benannten Verfahrens hergestellt wurde und in den handelsüblichen Portionen 31 oder 32 verkauft wird. In diesem Beispiel ermöglichen die Position, die Form und die Graphik der Etikette 4 eine eindeutige Identifizierung jeder für den Detailverkauf geeigneten Portion 31 oder 32 des Laibes 3.

Ein äquivalentes aber weniger praktisches Verfahren besteht darin, dass beide Seiten des Käselaibes mit einer feuchtigkeitsabsorbierenden Etikette markiert werden, indem eine erste Etikette vor dem Abfüllen der Käsekörner auf den Boden 10 der Pressform 1 gelegt und befestigt wird und eine zweite Etikette nach dem Abfüllen der Käsekörner auf den frischen Laib 2 gelegt wird.

## Patentansprüche

1. Verfahren zur Markierung von Käselaiben (3), die für den Detailverkauf in mehreren Portionen (31, 32) bestimmt sind, durch das Hinzufügen einer Etikette (4), wobei jede benannte Portion (31, 32) des benannten Laibes (3) eindeutig markiert wird, **dadurch gekennzeichnet,**
**dass** die benannte Etikette (4) vor dem Pressen des Käses auf den benannten Laib (3) gelegt wird,
und **dass** die benannte Etikette (4) durch Einwachsen in die Rinde des benannten Laibes (3) eingebunden wird.

2. Verfahren gemäss dem Anspruch 1, **dadurch gekennzeichnet, dass** eine Seite des benannten Laibes (3) markiert wird.

3. Verfahren gemäss einem der Ansprüche 1 bis 2, **dadurch gekennzeichnet, dass** die benannte Etikette (4) aus Teebeutelpapier besteht.

4. Verfahren gemäss einem der Ansprüche 1 bis 3, **dadurch gekennzeichnet, dass** die benannte Etikette (4) an der Oberfläche des benannten Laibes (3) sichtbar ist.

5. Verfahren gemäss einem der Ansprüche 1 bis 4, **dadurch gekennzeichnet, dass** auf die benannte Etikette (4) Informationen über die Herkunft des benannten Laibes (3) und/oder dessen Zutaten gedruckt werden.

6. Verfahren gemäss einem der Ansprüche 1 bis 5, **dadurch gekennzeichnet, dass** auf die benannte Etikette (4) Informationen über die Inhaltsstoffe des Käses gedruckt werden, die vor dem Pressen des Käses bekannt sind.

7. Verfahren gemäss einem der Ansprüche 1 bis 6, **dadurch gekennzeichnet, dass** die benannte Etikette (4) zur Rückverfolgbarkeit der einzelnen Laibe (3) gebraucht wird.

8. Verfahren gemäss einem der Ansprüche 1 bis 7, **dadurch gekennzeichnet, dass** eine weitere Etikette (5) auf die frei verfügbare Seite des benannten Laibes (3) geklebt wird.

9. Verfahren gemäss einem der Ansprüche 1 bis 8, **dadurch gekennzeichnet, dass** der Rand (30) des ausgereiften Laibes (3) markiert wird.

10. Käselaib (3), der für den Detailverkauf in mehreren Portionen (31, 32) bestimmt ist, **dadurch gekennzeichnet,**
**dass** eine Seite des benannten Laibes (3) durch eine im Laib eingebundene Etikette (4) markiert wird,
und **dass** auf die andere Seite eine weitere Etikette (5) geklebt wird,
und **dass** beide benannten Etiketten derart bedruckt, geschnitten und geklebt werden, dass jede Seite jeder benannten Portion (31, 32) des benannten Laibes (3) einen Teil der entsprechenden Etiketten enthält, der die Identifikation der benannten Portion (31, 32) ermöglicht.

11. Käselaib (3) gemäss dem Anspruch 10 **dadurch gekennzeichnet, dass** die benannte eingebundene Etikette (4) aus Teebeutelpapier besteht.

12. Käselaib (3) gemäss einem der Ansprüche 10 bis 11 **dadurch gekennzeichnet, dass** auf die benannte eingebundene Etikette (4) nur Eigenschaften des Käses und/oder dessen Zutaten gedruckt werden, die vor dem Pressen des benannten Laibes (3) bekannt sind.

13. Käselaib (3) gemäss einem der Ansprüche 10 bis 12 **dadurch gekennzeichnet, dass** auf die benannte geklebte Etikette (5) Informationen gedruckt werden, die vom Verteiler und/oder vom Detaillisten bestimmt werden.

14. Käselaib (3) gemäss einem der Ansprüche 10 bis 13, **dadurch gekennzeichnet, dass** der Rand (30) des benannten Laibes (3) markiert wird.

## Claims

1. Method for marking rounds of cheese (3) intended for the retail sales in many portions (31, 32) through the addition of a label (4), where each said portion (31, 32) of said round of cheese (3) is clearly marked, **characterized**
**in that** said label (4) is laid on said round of cheese (3) before the pressing of the cheese,
and **in that** said label (4) is bound by penetration into the rind of said round of cheese (3).

2. Method according to claim 1, **characterized in that** one side of said round of cheese (3) is marked.

3. Method according to one of the claims 1 to 2, **characterized in that** said label (4) is made up of tea bag paper.

4. Method according to one of the claims 1 to 3, **characterized in that** said label (4) is visible at the surface of said round of cheese (3).

5. Method according to one of the claims 1 to 4, **characterized in that** items of information about the origin of said round of cheese (3) and/or of its ingredients are printed on said label (4).

6. Method according to one of the claims 1 to 5, **characterized in that** items of information about the constituents of the cheese which are known before the pressing of the cheese are printed on said label (4).

7. Method according to one of the claims 1 to 6, **characterized in that** said label (4) is used for the traceability of the individual rounds of cheese (3).

8. Method according to one of the claims 1 to 7, **characterized in that** another label (5) is glued on the freely available side of said round of cheese (3).

9. Method according to one of the claims 1 to 8, **characterized in that** the edge (30) of the matured round of cheese (3) is marked.

10. Round of cheese (3) intended for the retail sales in many portions (31, 32), **characterized**
**in that** one side of said round of cheese (3) is marked by a label (4) bound into the round of cheese,
and **in that** another label (5) is glued on the other side,
and **in that** both said labels are printed, cut and glued such that each side of each said portion (31, 32) of said round of cheese (3) comprises a part of the corresponding labels allowing the identification of said portion (31, 32).

11. Round of cheese (3) according to claim 10, **characterized in that** said bound label (4) is made up of tea bag paper.

12. Round of cheese (3) according to one of the claims 10 to 11, **characterized in that** only properties of the cheese and/or of its ingredients which are known before the pressing of said round of cheese (3) are printed on said bound label (4).

13. Round of cheese (3) according to one of the claims 10 to 12, **characterized in that** items of information determined by the distributor and/or by the retailer are printed on said glued label (5).

14. Round of cheese (3) according to one of the claims 10 to 13, **characterized in that** the edge (30) of said round of cheese (3) is marked.

## Revendications

1. Procédé pour le marquage de meules de fromage (3) destinées à la vente au détail en plusieurs portions (31, 32) par l'adjonction d'une étiquette (4), chacune desdites portions (31, 32) de ladite meule (3) étant clairement marquée, **caractérisée**
**en ce que** ladite étiquette (4) est posée sur ladite meule (3) avant le pressage du fromage,
et **en ce que** ladite étiquette (4) est incrustée dans la croûte de ladite meule (3).

2. Procédé selon la revendication 1, **caractérisé en ce qu'**une face de ladite meule (3) est marquée.

3. Procédé selon l'une des revendications 1 à 2, **caractérisé en ce que** ladite étiquette (4) est faite de papier pour sachets de thé.

4. Procédé selon l'une des revendications 1 à 3, **caractérisé en ce que** ladite étiquette (4) est visible à la surface de ladite meule (3).

5. Procédé selon l'une des revendications 1 à 4, **caractérisé en ce que** des informations sur l'origine de ladite meule (3) et/ou de ses ingrédients sont imprimées sur ladite étiquette (4).

6. Procédé selon l'une des revendications 1 à 5, **caractérisé en ce que** des informations sur les composants du fromage, qui sont connues avant le pressage du fromage, sont imprimées sur ladite étiquette (4).

7. Procédé selon l'une des revendications 1 à 6, **caractérisé en ce que** ladite étiquette (4) est utilisée pour la traçabilité des meules (3) individuelles.

8. Procédé selon l'une des revendications 1 à 7, **caractérisé en ce qu'**une autre étiquette (5) est collée sur la face librement disponible de ladite meule (3).

9. Procédé selon l'une des revendications 1 à 8, **caractérisé en ce que** la tranche (30) de la meule (3) mature est marquée.

10. Meule de fromage (3) destinée à la vente au détail en plusieurs portions (31, 32), **caractérisée**
**en ce qu'**une face de ladite meule (3) est marquée par une étiquette (4) incorporée à la meule,
et **en ce qu'**une autre étiquette (5) est collée sur l'autre face,
et **en ce que** les deux dites étiquettes sont imprimées, coupées et collées de telle façon que chaque face de chaque dite portion (31, 32) de ladite meule (3) comprend une partie des étiquettes correspondantes permettant l'identification de ladite portion (31, 32).

11. Meule de fromage (3) selon la revendication 10, **caractérisée en ce que** ladite étiquette (4) incorporée est faite de papier pour sachets de thé.

12. Meule de fromage (3) selon l'une des revendications 10 à 11, **caractérisée en ce que** sur ladite étiquette (4) incorporée ne sont imprimées que des propriétés du fromage et/ou de ses ingrédients qui sont connues avant le pressage de ladite meule (3).

13. Meule de fromage (3) selon l'une des revendications 10 à 12, **caractérisée en ce que** sur ladite étiquette (5) collée sont imprimées des informations qui sont déterminées par le distributeur et/ou par le détaillant.

14. Meule de fromage (3) selon l'une des revendications 10 à 13, **caractérisée en ce que** la tranche (30) de ladite meule (3) est marquée.
